# EUROPÄISCHE PATENTSCHRIFT

(11) **EP 0 965 617 B1**
(45) Veröffentlichungstag und Bekanntmachung des Hinweises auf die Patenterteilung: **30.01.2002**
(21) Anmeldenummer: 99110831.7
(22) Anmeldetag: 05.06.1999
(51) Int. Cl.: C09B 67/48, C09B 67/10, C09B 63/00

(54) **Neue Kristallmodifikation vom Pigment C.I. Pigment Red 53:2 (gamma-Phase)**
Crystalline modification of pigment C.I. Pigment Red 53:2 (gamma phase)
Modification cristalline du pigment C.I. Pigment Red 53:2 (phase gamma)

(30) Priorität: 19.06.1998 DE 19827272
(43) Veröffentlichungstag der Anmeldung: 22.12.1999
(73) Patentinhaber: Clariant GmbH, 65929 Frankfurt am Main (DE)
(72) Erfinder: Schmidt, Martin U., Dr., 65931 Frankfurt am Main (DE); Metz, Hans Joachim, Dr., 64285 Darmstadt (DE)

(56) Entgegenhaltungen:
- EP-A- 0 097 913
- EP-A- 0 545 072
- FR-A- 2 432 538
- PATENT ABSTRACTS OF JAPAN vol. 098, no. 014, 31. Dezember 1998 (1998-12-31) & JP 10 231438 A (DAINIPPON INK &CHEM INC), 2. September 1998 (1998-09-02)

## Beschreibung

Die Erfindung betrifft eine neue kristallographische Modifikation (γ-Modifikation) von C.I. Pigment Red 53:2. Als C.I. Pigment Red 53:2 (im folgenden: P.R.53:2) wird die Verbindung der Formel (I) bezeichnet, die aus einer Kupplung von diazotierter 2-Amino-5-chlor-4-methyl-benzolsulfonsäure mit β-Naphthol, und nachfolgender Umsetzung der gebildeten Sulfosäure mit einem Calciumsalz entsteht (M = ½ Ca²⁺).

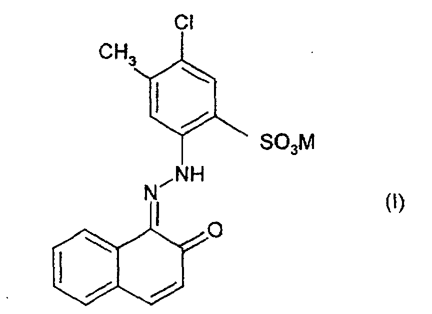

Im festen Zustand kann die Verbindung der Formel (I) auch in einer anderen tautomeren oder isomeren Form vorliegen und gegebenenfalls noch Na⁺-Ionen, Chlorid-Ionen und/oder Wassermoleküle enthalten.

Pigment Red 53 ist als Natriumsalz (M = Na⁺) schon seit langem bekannt. Das Bariumsalz, P.R.53:1, (M = Ba²⁺/2) wird seit langem in großen Mengen als rotes Pigment produziert. Es findet seinen Einsatz hauptsächlich in Druckfarben. Das Strontiumsalz (P.R.53:3) ist von geringerer wirtschaftlicher Bedeutung, ebenso die einzige bislang bekannte Modifikation des Calciumsalzes (Pigment Red 53:2).

Die meisten organischen Pigmente existieren in mehreren verschiedenen Kristallmodifikationen, auch "polymorphe Formen" genannt. Kristallmodifikationen haben dieselbe chemische Zusammensetzung, aber eine unterschiedliche Anordnung der Moleküle im Kristall. Die Kristallstruktur kann Einfluß auf die chemischen und physikalischen Eigenschaften haben, daher unterscheiden sich die einzelnen Kristallmodifikationen oftmals in der Rheologie, der Farbe und anderen coloristischen Eigenschaften. Die unterschiedlichen Kristallmodifikationen können durch Röntgenpulverdiffraktometrie identifiziert werden.

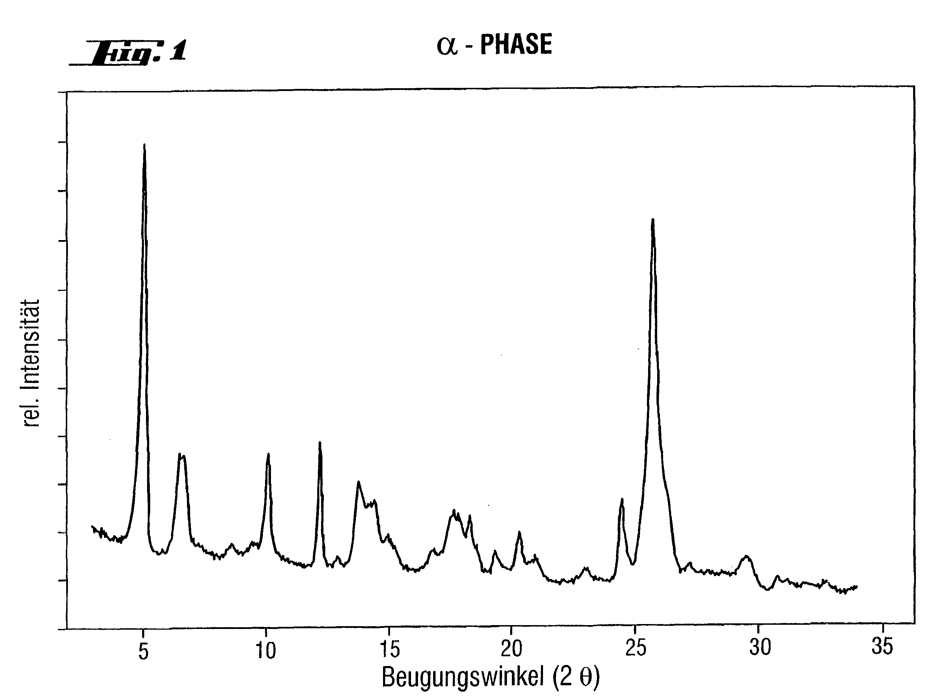

Von P.R.53:2 (M = Ca²⁺/2) ist bislang eine Kristallmodifikation bekannt, die im folgenden als α-Modifikation bezeichnet wird. Sie zeichnet sich durch folgende charakteristische Linien im Röntgenpulverdiagramm aus (Cu-K_{α}-Strahlung, doppelte Beugungswinkel, 2Θ-Werte in Grad, Netzebenenabstände d in Å⁻¹, siehe Fig. 1):

| α: | 2Θ | d | Relative Intensität in % |
|---|---|---|---|
| | 5.1 | 17.4 | 100 |
| | 6.6 | 13.4 | 73 (Doppellinie) |
| | 10.2 | 8.7 | 37 |
| | 12.2 | 7.2 | 39 |
| | 13.8 | 6.4 | 31, breit |
| | 14.4 | 6.2 | 27, breit |
| | 17.8 | 5.0 | 24, breit |
| | 18.4 | 4.8 | 22 |
| | 20.4 | 4.4 | 20 |
| | 24.6 | 3.6 | 26 |
| | 25.8 | 3.4 | 86 |

Alle Linienlagen sind mit einer Ungenauigkeit von ± 0.2° behaftet. Je nach Kristallgröße und Kristallqualität können die Linien bei 13.8° und 14.4° zu einer breiten Linie verschmelzen, ebenso die Linien bei 17.8° und 18.4°.

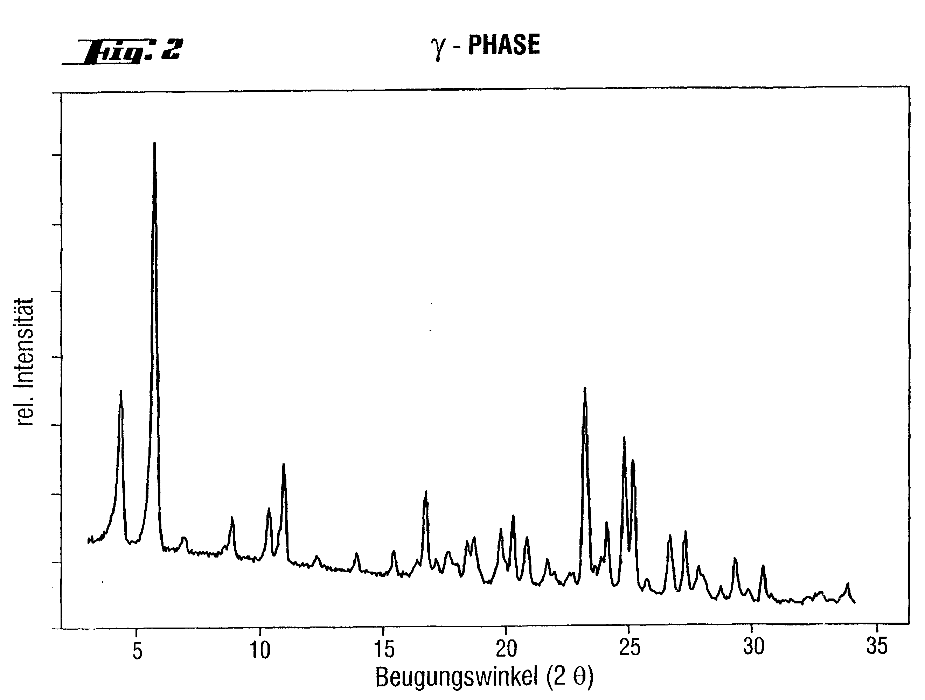

Es wurde nun überraschenderweise eine neue Kristallmodifikation von P.R.53:2 gefunden, die als γ-Modifikation bezeichnet wird. Sie zeichnet sich durch folgende charakteristische Linien aus (Cu-K_{α}-Strahlung, 2Θ-Werte in Grad, d-Werte in Å⁻¹, siehe Fig. 2):

| γ: | 2Θ | d | Relative Intensität in % |
|---|---|---|---|
| | 4.4 | 20.2 | 49 |
| | 5.8 | 15.4 | 100 |
| | 8.8 | 10.0 | 23 |
| | 10.3 | 8.6 | 25 |
| | 10.9 | 8.1 | 33 |
| | 12.2 | 7.3 | 15 |
| | 13.9 | 6.4 | 16 |
| | 15.4 | 5.8 | 15 |
| | 16.7 | 5.3 | 28 |
| | 17.6 | 5.0 | 16 |
| | 18.4 | 4.8 | 18 |
| | 18.6 | 4.8 | 18 |
| | 19.7 | 4.5 | 20 |
| | 20.8 | 4.3 | 18 |
| | 23.2 | 3.8 | 48 |
| | 24.0 | 3.7 | 21 |
| | 24.8 | 3.6 | 37 |
| | 25.2 | 3.5 | 34 |
| | 26.6 | 3.3 | 19 |
| | 27.3 | 3.3 | 19 |
| | 27.9 | 3.2 | 12 |
| | 29.3 | 3.0 | 14 |

Auch hier sind alle Linienlagen mit einer Ungenauigkeit von ± 0.2° behaftet.

Die relativen Intensitäten werden üblicherweise durch Vorzugsorientierung und Textureffekte beeinflußt.

Es ist möglich, daß ein Teil (bis zu 50 %), der Ca-Ionen im Kristallgitter der erfindungsgemäßen Kristailmodifikation durch andere Kationen, z.B. Na⁺, H⁺, K⁺, NH₄⁺, Mg²⁺, Sr²⁺, Ba²⁺, Sn²⁺, Zn²⁺, Mn²⁺, Fe²⁺, Fe³⁺, Al³⁺, Si⁴⁺, Ti⁴⁺ oder TiO²⁺, ersetzt ist. Solche Mischkristalle können sich bilden, wenn bei den nachstehend beschriebenen Maßnahmen zur Herstellung der erfindungsgemäßen Modifikation auch die genannten anderen Kationen zugegen sind. Außerdem können Anionen, wie z.B. Cl⁻, und/oder Wassermoleküle im Kristallgitter eingelagert sein. Es ist jedoch bevorzugt, daß M zu 80 % bis annähernd 100 % Calcium bedeutet.

Gegenstand der Erfindung ist daher C.I. Pigment Red 53:2 der vorstehenden Formel (I), worin M ein Kation ist, mit der Maßgabe, daß mindestens 50 % der Kationen Calciumionen sind, in der γ-Modifikation, gekennzeichnet durch vorstehend genannte charakteristische Reflexe im Röntgenpulverdiffraktogramm.

Die γ-Modifikation ist schwerlöslich, farbstark und zeichnet sich durch brillante, orange Färbungen aus.

Gegenstand der Erfindung ist auch ein Verfahren zur Herstellung der γ-Modifikation von C.I. Pigment Red 53:2, indem man β-Naphthol mit dem Diazoniumsalz der Formel (2) 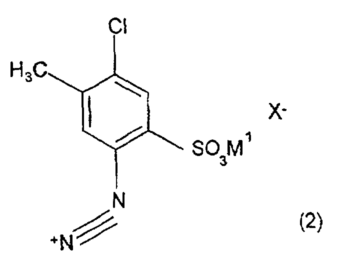 wobei M¹ Wasserstoff oder ein Kationenequivalent, wie z.B. Na, K, ½ Mg, 1/3 Al, ½ Zn oder NH₄;
und X ein Anion oder Anionenequivalent, wie z.B. Cl⁻, ½ SO₄²⁻, HSO₄⁻, NO₃⁻ oder CH₃COO⁻, bedeuten;
und einem Calciumsalz, beispielsweise CaCl₂, Ca(NO₃)₂, CaO,Ca(OH)₂ oder Caacetat, in Gegenwart eines Lösemittels aus der Gruppe N-Methylpyrrolidon, i-Propanol, Isobutanol oder Amylalkohol, bevorzugt Isobutanol, oder einer Mischung der genannten organischen Lösemittel mit bis zu 99 Gew.-%, vorzugsweise 0,5 bis 90 Gew.-%, Wasser, umsetzt.

Die Umsetzung kann üblicherweise bei Temperaturen von 0°C bis 200°C, vorzugsweise von 20°C bis zum Siedepunkt des genannten Lösemittels bei Normaldruck, durchgeführt werden.
Die erfindungsgemäße Kristallmodifikation erhält man ebenfalls, wenn man C.I. Pigment Red 53:2, welches vollständig oder teilweise in der α-Modifikation vorliegt, zusammen mit einem der genannten Lösemittel auf eine Temperatur von 40 bis 200°C, vorzugsweise 60°C bis zum Siedepunkt des Lösemittels bei Normaldruck,erhitzt, wobei das Pigment teilweise oder vollständig in Lösung geht, und anschließend wieder ausfällt, beispielsweise durch Temperaturerniedrigung auf -20 bis +90°C und/oder durch Zugabe von Wasser oder/und einem zweiten Lösemittel mit geringerem Lösungsvermögen, und/oder durch Änderung des pH-Wertes, und/oder durch Zugabe eines Salzes, wie z.B. NaCl.

Das zum Lösen oder teilweisen Lösen in der Hitze verwendete Lösemittel kann 0 bis 99 Gew.-%, vorzugsweise 0,5 bis 90 Gew.-%, Wasser enthalten.
Das Erhitzen kann bei Normaldruck, bei Unterdruck oder unter Druck erfolgen.
Als zweites Lösungsmittel eignen sich beispielsweise Benzol, Toluol oder Alkane. Die Änderung des pH-Wertes kann durch Zugabe von Säuren oder Basen hervorgerufen werden.
Das als Ausgangsprodukt eingesetzte P.R. 53:2 kann als wasserfeuchter Preßkuchen, als Lösung oder als wäßrige Suspension eingesetzt werden.
Die Dauer der beschriebenen Lösemittelbehandlung kann 10 Sekunden bis 24 Stunden, vorzugsweise 10 Minuten bis 2 Stunden, betragen. Um die erfindungsgemäße Kristallmodifikation zu erhalten, ist es zweckmäßig, anschließend die Temperatur auf einen Wert im Bereich zwischen 20 und 80°C abzusenken, vorzugsweise im Verlauf von 5 Minuten bis 2 Stunden.

Das erfindungsgemäße P.R. 53:2 der γ-Modifikation kann in der Wärme oder nach Abkühlen, z.B. auf Raumtemperatur, in der üblichen Weise, z.B. durch Abfiltrieren oder durch Verdampfen des Lösemittels, gegebenenfalls unter Anlegen von Vakuum, isoliert werden. Je nach verwendetem Lösemittel kann es zweckmäßig sein, den Preßkuchen oder Rückstand mit einer organischen Flüssigkeit, z.B. einem niederen Alkohol, wie Methanol, Ethanol, Propano! oder Isopropanol, oder mit Aceton zu waschen.
Je nach gewünschtem Anwendungsbereich kann es sinnvoll sein, das erhaltene Pigment einer mechanischen Feinverteilung zu unterwerfen. Die Feinverteilung kann durch Naß- oder Trockenmahlung erfolgen. An die Mahlung kann sich eine Behandlung mit einem Lösemittel, mit Wasser oder einem Lösemittel-Wasser-Gemisch anschließen, um das Pigment in eine gebrauchsfähige Form zu überführen.

Die erfindungsgemäße Kristallmodifikation wird ebenfalls erhalten, wenn man C.I. Pigment Red 53:2, welches vollständig oder teilweise in der α-Modifikation vorliegt, in Gegenwart von N-Methylpyrrolidon, Isopropanol, Isobutanol oder Amylalkohol, bevorzugt Isobutanol, knetet oder mahlt. Das Kneten oder Mahlen kann bei einer Temperatur von 40 bis 200°C, vorzugsweise von 60 bis zum Siedepunkt des gewählten Lösemittels bei Normaldruck, durchgeführt werden.

In Abhängigkeit von den verwendeten Lösemitteln, der Konzentration, der angewandten Temperatur, dem Druck, der Abkühlungsgeschwindigkeit der Lösung und der Gegenwart von Impfkristallen kann die reine γ-Phase, eine Mischung von α-und γ-Phase oder eine Mischung aus γ- und einer neuen Phase (δ-Phase) entstehen.

Die δ-Phase ist in der am Tage der vorliegenden Anmeldung eingereichten DE-A-198 27 273.1 beschrieben.

Die reine oder überwiegend reine γ-Modifikation entsteht bevorzugt, wenn man von einer Lösung ausgeht, in der bereits Impfkristalle oder Kristallkeime der γ-Modifikation vorhanden sind, und wenn man diese Lösung so langsam abkühlt, oder ein zweites, schlechter lösendes Lösemittel, eine Säure, Base oder ein Salz so langsam zugibt, daß die Übersättigung in einem Bereich gehalten wird, in dem die Kristallwachstumsgeschwindigkeit relativ hoch, die Kristallkeimbildungsgeschwindigkeit jedoch relativ gering ist, so daß die vorhandenen Kristallkeime unter Beibehaltung der Modifikation wachsen. Der Einsatz eines mechanischen Rührers kann von Vorteil sein, da er vorhandene Kristalle der γ-Modifikation in viele kleinere Bruchstücke zerschlägt, die dann wieder als Kristallkeime für die γ-Modifikation dienen (sogenannte Sekundärnukleation). Wenn die Übersättigung höher ist, z.B. weil die Lösung schneller abgekühlt wird, oder ein zweites Lösemittel, eine Säure, Base oder ein Salz schneller zugegeben wird, ist die Kristallkeimbildungsgeschwindigkeit viel höher, so daß spontan viele Kristallkeime der γ-Modifikation und anderer Modifikationen entstehen können; dabei erhält man meist Modifikationsmischungen, die nur zum Teil aus der γ-Modifikation bestehen.

Der Herstellung einer Mischung der γ-Modifikation mit anderen Kristallmodifikationen von P.R.53:2 kann von Interesse sein, wenn bestimmte coloristische und rheologische Eigenschaften gewünscht werden, beispielsweise ein bestimmter Orange-Farbton, der zwischen der orangeroten α-Modifikation und der orangen γ-Modifikation liegt. Andererseits ist es auch möglich, eine Mischung aus γ-Modifikation und anderen Modifikationen aufzukonzentrieren, um einen höheren γ-Anteil oder auch die reine γ-Modifikation zu erhalten, beispielsweise durch Windsichten, Rekristallisation, selektives Herauslösen oder Extrahieren der anderen Modifikation oder durch wiederholtes Anwenden von erfindungsgemäßen Verfahrensmaßnahmen, in denen das Entstehen der γ-Modifikation begünstigt ist.

Gegenstand der vorliegenden Erfindung ist daher auch eine C.I. Pigment Red 53:2-Mischung, die mindestens 10 %, vorzugsweise mindestens 25 %, insbesondere mindestens 50 %, besonders bevorzugt mindestens 75 %, der γ-Modifikation enthält.

Zur Erleichterung des Modifikationswechsels, zur Stabilisierung der γ-Modifikation, zur Verbesserung der coloristischen Eigenschaften und/oder zur Erzielung bestimmter coloristischer Effekte können an beliebigen Stellen des Verfahrens Pigmentdispergatoren, oberflächenaktive Mittel, Entschäumer, Extender oder andere Zuschlagstoffe zugesetzt werden. Es können auch Mischungen dieser Zusatzstoffe verwendet werden. Die Zugabe der Zusatzstoffe kann auf einmal oder in mehreren Portionen erfolgen. Die Zusatzstoffe können an jedem Punkt der Synthese oder der verschiedenen Behandlungen (Erwärmen mit einem Lösemittel oder in Wasser, Umkristallisieren, Mahlen, Kneten) oder nach den Nachbehandlungen zugegeben werden. Der am besten geeignete Zeitpunkt muß zuvor durch orientierende Versuche ermittelt werden.

Das erfindungsgemäße C.I. Pigment Red 53:2 in der γ-Modifikation, oder Mischungen, die die γ-Modifikation enthalten oder die beschriebenen Mischkristalle der γ-Modifikation mit anderen Kationen, eignen sich zum Pigmentieren von Lacken und Kunststoffen, zur Herstellung von Druckfarben und wäßrigen Pigmentpräparationen, sowie zur Saatguteinfärbung.

Die erfindungsgemäße γ-Modifikation, besagte Mischungen sowie besagte Mischkristalle sind auch geeignet als Farbmittel in elektrophotographischen Tonern und Entwicklern, wie z.B. Ein- oder Zweikomponentenpulvertonern (auch Ein- oder Zweikomponenten-Entwickler genannt), Magnettoner,Flüssigtoner, Polymerisationstoner sowie Spezialtoner.

Typische Tonerbindemittel sind Polymerisations-, Polyadditions- und Polykondensationsharze, wie Styrol-,Styrolacrylat-, Styrolbutadien-, Acrylat-, Polyester-, Phenol-Epoxidharze, Polysulfone, Polyurethane, einzeln oder in Kombination, sowie Polyethylen und Polypropylen, die noch weitere Inhaltsstoffe, wie Ladungssteuermittel, Wachse oder Fließhilfsmittel, enthalten können oder im Nachhinein mit diesen Zusätzen modifiziert werden.

Desweiteren sind die erfindungsgemäße γ-Modifikation, eine der besagten Mischungen oder Mischkristalle geeignet als Farbmittel in Pulvern und Pulverlacken, insbesondere in triboelektrisch oder elektrokinetisch versprühbaren Pulverlacken, die zur Oberflächenbeschichtung von Gegenständen aus beispielsweise Metall, Holz, Kunststoff, Glas, Keramik, Beton, Textilmaterial, Papier oder Kautschuk zur Anwendung kommen.
Als Pulverlackharze werden typischerweise Epoxidharze, carboxyl- und hydroxylgruppenhaltige Polyesterharze, Polyurethan- und Acrylharze zusammen mit üblichen Härtern eingesetzt. Auch Kombinationen von Harzen finden Verwendung. So werden beispielsweise häufig Epoxidharze in Kombination mit carboxyl- und hydroxylgruppenhaltigen Polyesterharzen eingesetzt. Typische Härterkomponenten (in Abhängigkeit vom Harzsystem) sind beispielsweise Säureanhydride, Imidazole sowie Dicyandiamid und deren Abkömmlinge,verkappte Isocyanate, Bisacylurethane, Phenol- und Melaminharze, Triglycidylisocyanurate, Oxazoline und Dicarbonsäuren.

Außerdem sind die erfindungsgemäße γ-Modifikation oder eine der besagten Mischungen und Mischkristalle als Farbmittel in Ink-Jet Tinten auf wäßriger und nichtwäßriger Basis sowie in solchen Tinten, die nach dem hot-melt Verfahren arbeiten, geeignet. Weiterhin sind die erfindungsgemäße γ-Modifikation oder eine der besagten Mischungen und Mischkristalle als Farbmittel für Farbfilter sowohl für die additive wie subtraktive Farberzeugung geeignet.

In den folgenden Beispielen sind Teile und Prozentangaben auf das Gewicht bezogen. Die Bestimmung der Kristallmodifikation der erhaltenen Produkte erfolgt durch Röntgenpulverdiffraktometrie (Cu-K_{α}-Strahlung).

### Beispiele:

### 1) Zugabe von Isobutanol während der Synthese. Mischung aus γ- und δ-Modifikation

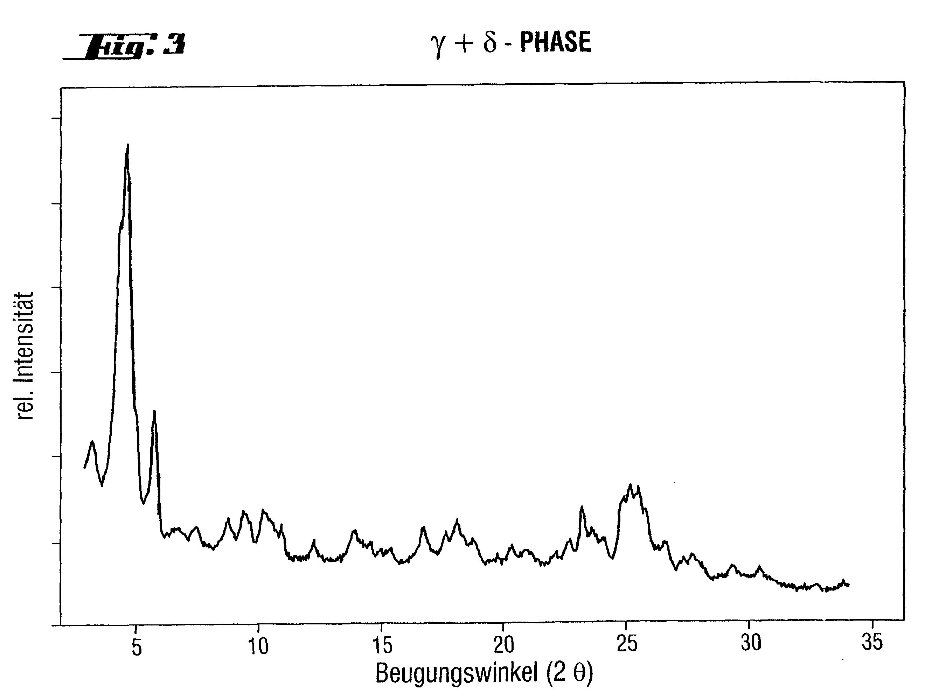

a) Diazotierung und Kupplung:
   222 Teile 2-Amino-4-methyl-5-chlor-benzolsulfonsäure werden bei Raumtemperatur mit 2500 Teilen Wasser und 150 Teilen 31%iger Salzsäure verrührt. Bei 20-25°C wird mit 173 Teilen 40%iger NaNO₂-Lösung innerhalb von 30 Minuten diazotiert und 1 Stunde bei Raumtemperatur nachgerührt. 150 Teile β-Naphthol werden in 1100 Teilen 4%iger NaOH gelöst und bei Raumtemperatur innerhalb von 60 Minuten zur Diazo-Suspension zugegeben.
b) Verlackung:
   Der pH-Wert der Suspension aus a) wird mit NaOH auf 8,0 gestellt und 61 Teile CaCl₂ und 572 Teile eines Gemisches aus 84% Isobutanol und 16% Wasser zugegeben. Die Mischung wird zum Sieden erhitzt und das Isobutanol abdestilliert. Die Suspension wird mit Wasser versetzt und heiß filtriert. Der Preßkuchen wird mit Wasser gewaschen und bei 60°C getrocknet. Man erhält 396 Teile P.R.53:2, welches zu etwa gleichen Teilen aus γ- und δ-Modifikation besteht und durch Spuren des Natriumsalzes von P.R.53 (Schulter bei 2Θ = 5.0°) verunreinigt ist (Fig. 3).

### 2) Zugabe von Isobutanol nach der Synthese

Diazotierung und Kupplung erfolgen wie in Beispiel 1a). Anschließend wird der pH-Wert mit NaOH auf 8,0 gestellt und eine Lösung von 61 Teilen CaCl₂ in 500 Teilen Wasser zugegeben. Die Mischung wird zum Sieden erhitzt und 15 Minuten bei 95°C gerührt. Man läßt die Suspension über Nacht abkühlen.

Die Suspension wird mit 2400 Teilen Isobutanol versetzt, 15 Minuten lang zum Sieden erhitzt (90°C) und anschließend das Isobutanol abdestilliert. Die Mischung wird bei 60-80°C filtriert. Der Preßkuchen wird mit kaltem Wasser gewaschen und bei 60°C getrocknet. Man erhält 400 Teile P.R.53:2 in der γ-Modifikation (Fig. 2).

### 3) Erhitzen in Isobutanol/Wasser

Diazotierung und Kupplung erfolgen wie in Beispiel 1a). Anschließend wird der pH-Wert mit NaOH auf 8,0 gestellt und eine Lösung von 61 Teilen CaCl₂ in 500 Teilen Wasser zugegeben. Die Mischung wird zum Sieden erhitzt und 15 Minuten bei 95°C gerührt. Die Suspension wird heiß filtriert; der Preßkuchen wird mit Wasser chloridfrei gewaschen. Man erhält 630 Teile Preßkuchen, der in der α-Modifikation vorliegt und kleine Mengen des Na-Salzes von P.R. 53 enthält.
Der Preßkuchen wird mit 2130 Teilen Wasser angerührt, mit 1200 Teilen Isobutanol versetzt und 15 Minuten zum Sieden erhitzt (90°C). Das Isobutanol wird abdestilliert und die Suspension wird bei 60-80°C filtriert. Das Pigment wird mit Wasser gewaschen und bei 60°C getrocknet. Man erhält 188 Teile P.R.53:2, welches in der γ-Modifikation mit geringen Beimengungen an α-Modifikation vorliegt.

### 4) Erhitzen in NMP/Wasser

Der Preßkuchen der α-Modifikation von P.R.53:2 wird wie in Beispiel 3 hergestellt. Der Preßkuchen wird mit 2500 Teilen Wasser und 1500 Teilen N-Methylpyrrolidon angerührt und erwärmt. Bei Erreichen einer Temperatur von 60°C werden 1000 Teile Wasser zugesetzt, bei 80°C noch eimal 1500 Teile Wasser. Die Mischung wird 45 Minuten bei 90°C gerührt, dann filtriert. Das Pigment wird mit Wasser gewaschen und bei 60°C getrocknet. Man erhält 260 Teile P.R.53:2, welches in der γ-Modifikation vorliegt.

### 5) Erhitzen in Isopropanol

Der Preßkuchen der α-Modifikation von P.R.53:2 wird wie in Beispiel 6 hergestellt. 100 Teile dieses Preßkuchens werden mit 530 Teilen Isopropanol angerührt und 10 Minuten lang auf 78°C erhitzt. Die Mischung wird abfiltriert, der Rückstand mit Isopropanol gewaschen und bei 60°C getrocknet. Man erhält 25.5 Teile P.R.53:2, das in der γ-Modifikation vorliegt, und kleine Beimengungen des Natriumsalzes von P.R.53 enthält.

### 6) Erhitzen in Amylalkohol

Der Preßkuchen der α-Modifikation von P.R.53:2 wird wie in Beispiel 6 hergestellt. 100 Teile dieses Preßkuchens werden mit 530 Teilen Amylalkohol (2-Methyl-2-butanol) angerührt und 10 Minuten lang auf 85°C erhitzt. Die Mischung wird abfiltriert, der Rückstand mit Amylalkohol gewaschen und bei 60°C getrocknet. Man erhält 26 Teile P.R.53:2, das in der γ-Modifikation vorliegt, und kleine Beimengungen des Natriumsalzes von P.R.53 enthält.

## Patentansprüche

1. C.I. Pigment Red 53:2 der Formel (I) 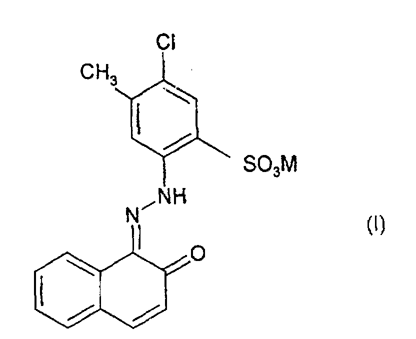 worin M ein Kation ist, mit der Maßgabe, daß mindestens 50 % der Kationen Calciumionen sind,
in der γ-Modifikation, **gekennzeichnet durch** folgende charakteristische Reflexe im Röntgenpulverdiffraktogramm, gemessen mit Cu-K_{α}-Strahlung:
| γ: | 2Θ | d | Relative Intensität in % |
|---|---|---|---|
| | 4.4 | 20.2 | 49 |
| | 5.8 | 15.4 | 100 |
| | 8.8 | 10.0 | 23 |
| | 10.3 | 8.6 | 25 |
| | 10.9 | 8.1 | 33 |
| | 12.2 | 7.3 | 15 |
| | 13.9 | 6.4 | 16 |
| | 15.4 | 5.8 | 15 |
| | 16.7 | 5.3 | 28 |
| | 17.6 | 5.0 | 16 |
| | 18.4 | 4.8 | 18 |
| | 18.6 | 4.8 | 18 |
| | 19.7 | 4.5 | 20 |
| | 20.8 | 4.3 | 18 |
| | 23.2 | 3.8 | 48 |
| | 24.0 | 3.7 | 21 |
| | 24.8 | 3.6 | 37 |
| | 25.2 | 3.5 | 34 |
| | 26.6 | 3.3 | 19 |
| | 27.3 | 3.3 | 19 |
| | 27.9 | 3.2 | 12 |
| | 29.3 | 3.0 | 14 |

2. C.I. Pigment Red 53:2 nach Anspruch 1, **dadurch gekennzeichnet, daß** M zu 80 % bis annähernd 100 % Calcium bedeutet.

3. C.I. Pigment Red 53:2 nach Anspruch 1 oder 2, **dadurch gekennzeichnet, daß** M, neben Calcium, eines oder mehrere der Kationen Na⁺, H⁺, K⁺, NH₄⁺,Mg²⁺, Sr²⁺, Ba²⁺, Sn²⁺, Zn²⁺, Mn²⁺, Fe²⁺, Fe³⁺, Al³⁺, Si⁴⁺, Ti⁴⁺ oder TiO²⁺ bedeutet.

4. Verfahren zur Herstellung von C.I. Pigment Red 53:2 nach einem oder mehreren der Ansprüche 1 bis 3, **dadurch gekennzeichnet, daß** man β-Naphthol mit dem Diazoniumsalz der Formel (2) 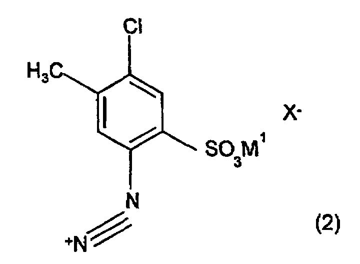 wobei M¹ Wasserstoff oder ein Kationenequivalent; und
X ein Anion bedeutet;
und mit einem Calciumsalz, CaO oder Ca(OH)₂, in Gegenwart eines oder mehrerer Lösemittel aus der Gruppe N-Methylpyrrolidon, Isopropanol, Isobutanol und Amylalkohol oder einer Mischung der genannten Lösemittel mit bis zu 99 Gew.-% Wasser, umsetzt.

5. Verfahren nach Anspruch 4, **dadurch gekennzeichnet, daß** die Umsetzung bei einer Temperatur von 0 bis 200°C durchgeführt wird.

6. Verfahren zur Herstellung von C.I. Pigment Red 53:2 nach einem oder mehreren der Ansprüche 1 bis 3, **dadurch gekennzeichnet, daß** man C.I. Pigment Red 53:2, welches vollständig oder teilweise in der α-Modifikation vorliegt, zusammen mit einem oder mehreren Lösemitteln aus der Gruppe N-Methylpyrrolidon, Isopropanol, Isobutanol und Amylalkohol oder einer Mischung der genannten Lösemittel mit bis zu 99 Gew.-% Wasser auf eine Temperatur von 40 bis 200°C erhitzt, anschließend auf eine Temperatur von -20 bis +90°C abkühlt, gegebenenfalls Wasser und/oder ein zweites Lösemittel mit geringerem Lösevermögen zusetzt und gegebenenfalls eine Säure, eine Lauge oder ein Salz zugibt.

7. Verfahren nach Anspruch 6, **dadurch gekennzeichnet, daß** man auf 60°C bis zum Siedepunkt des Lösemittels oder Lösemittelgemisches bei Normaldruck erhitzt.

8. Verfahren nach Anspruch 6 oder 7, **dadurch gekennzeichnet, daß** das C.I. Pigment Red 53:2, welches vollständig oder teilweise in der α-Modifikation vorliegt, als wasserfeuchter Preßkuchen oder als wäßrige Suspension eingesetzt wird.

9. Verfahren zur Herstellung von C.I. Pigment Red 53:2 nach einem oder mehreren der Ansprüche 1 bis 3, **dadurch gekennzeichnet, daß** man C.I. Pigment Red 53:2, welches vollständig oder teilweise in der α-Modifikation vorliegt, in Gegenwart eines oder mehrerer der Lösemittel N-Methylpyrrolidon, Isopropanol, Isobutanol und Amylalkohol oder in einer Mischung der genannten Lösemittel mit bis zu 99 Gew.-% Wasser bei einer Temperatur von 40 bis 200°C knetet oder mahlt.

10. C.I. Pigment Red 53:2-Mischung, enthaltend mindestens 10 % der γ-Modifikation nach einem oder mehreren der Ansprüche 1 bis 3.

11. C.I. Pigment Red 53:2 - Mischung nach Anspruch 10, enthaltend mindestens 25% der γ-Modifikation.

12. C.I. Pigment Red 53:2-Mischung nach Anspruch 10, enthaltend mindestens 50% der γ-Modifikation.

13. C.I. Pigment Red 53:2-Mischung nach Anspruch 10, enthaltend mindestens 75% der γ-Modifikation.

14. Verwendung von C.I. Pigment Red 53:2 nach einem oder mehreren der Ansprüche 1 bis 3 und 10 bis 13 zum Pigmentieren von Lacken, Kunststoffen, Druckfarben, elektrophotographischen Tonern und Entwicklern, Pulverlacken, Ink-Jet-Tinten, zur Herstellung wäßriger Pigmentpräparationen, sowie zur Saatguteinfärbung.

## Claims

1. A C.I. Pigment Red 53:2 of the formula (I) 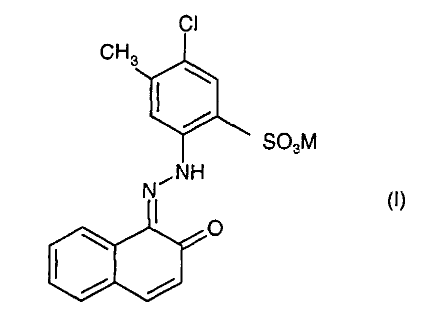 in which M is a cation, with the proviso that at least 50% of the cations are calcium ions,
in the γ-modification, which has the following characteristic reflections in the X-ray powder diffraction pattern, measured using Cu-K_{α} radiation:
| γ: | 2Θ | d | Relative intensity in % |
|---|---|---|---|
| | 4,4 | 20.2 | 49 |
| | 5.8 | 15.4 | 100 |
| | 8.8 | 10.0 | 23 |
| | 10.3 | 8.6 | 25 |
| | 10.9 | 8.1 | 33 |
| | 12.2 | 7.3 | 15 |
| | 13.9 | 6.4 | 16 |
| | 15.4 | 5.8 | 15 |
| | 16.7 | 5.3 | 28 |
| | 17.6 | 5.0 | 16 |
| | 18.4 | 4.8 | 18 |
| | 18.6 | 4.8 | 18 |
| | 19.7 | 4.5 | 20 |
| | 20.8 | 4.3 | 18 |
| | 23.2 | 3.8 | 48 |
| | 24.0 | 3.7 | 21 |
| | 24.8 | 3.6 | 37 |
| | 25.2 | 3.5 | 34 |
| | 26.6 | 3.3 | 19 |
| | 27.3 | 3.3 | 19 |
| | 27.9 | 3.2 | 12 |
| | 29.3 | 3.0 | 14 |

2. The C.I. Pigment Red 53:2 as claimed in claim 1, wherein from 80% to almost 100% of M are calcium.

3. The C.I. Pigment Red 53:2 as claimed in claim 1 or 2, wherein M is one or more cations Na⁺, H⁺, K⁺, NH₄⁺, Mg²⁺, Sr²⁺, Ba²⁺, Sn²⁺, Zn²⁺, Mn²⁺, Fe²⁺, Fe³⁺, Al³⁺, Si⁴⁺, Ti⁴⁺ or TiO²⁺, in addition to calcium.

4. A process for the preparation of C.I. Pigment Red 53:2 as claimed in one or more of claims 1 to 3, wherein β-naphthol is reacted with the diazonium salt of the formula (2) 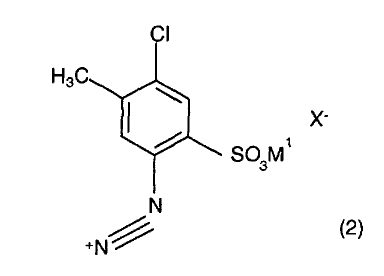 in which M¹ is hydrogen or a cation equivalent and
X is an anion;
and with a calcium salt, CaO, or Ca(OH)₂, in the presence of one or more solvents from the group consisting of N-methylpyrrolidone, isopropanol, isobutanol and amyl alcohol or a mixture of said solvents with up to 99% by weight of water.

5. The process as claimed in claim 4, wherein the reaction is carried out at a temperature of from 0 to 200°C.

6. A process for the preparation of C.I. Pigment Red 53:2 as claimed in one or more of claims 1 to 3, wherein C.I. Pigment Red 53:2 which is present wholly or partially in the α-modification is heated, together with one or more solvents from the group consisting of N-methylpyrrolidone, isopropanol, isobutanol and amyl alcohol or a mixture of said solvents with up to 99% by weight of water, to a temperature of from 40 to 200°C, and then cooled to a temperature of from -20 to +90°C, if required water and/or a second solvent having low dissolving power are added and, if required, an acid, an alkali or a salt is added.

7. The process as claimed in claim 6, wherein said C.I. Pigment Red 53:2 is heated to from 60°C to the boiling point of the solvent or solvent mixture at atmospheric pressure.

8. The process as claimed in claim 6 or 7, wherein the C.I. Pigment Red 53:2 which is present wholly or partly in the α-modification is used in the form of a water-moist press cake or as an aqueous suspension.

9. A process for the preparation of C.I. Pigment Red 53:2 as claimed in one or more of claims 1 to 3, wherein C.I. Pigment Red 53:2 which is present wholly or partly in the α-modification is kneaded or milled in the presence of one or more solvents N-methylpyrrolidone, isopropanol, isobutanol and amyl alcohol or in a mixture of said solvents with up to 99% by weight of water at a temperature of from 40 to 200°C.

10. A C.I. Pigment Red 53:2 mixture containing at least 10% of the γ-modification as claimed in one or more of claims 1 to 3.

11. The C.I. Pigment Red 53:2 mixture as claimed in claim 10 containing at least 25% of the γ-modification.

12. The C.I. Pigment Red 53:2 mixture as claimed in claim 10 containing at least 50% of the γ-modification.

13. The C.I. Pigment Red 53:2 mixture as claimed in claim 10 containing at least 75% of the γ-modification.

14. The use of C.I. Pigment Red 53:2 as claimed in one or more of claims 1 to 3 and 10 to 13 for pigmenting coatings, plastics, printing inks, electrophotographic toners and developers, powder coatings, and inkjet inks, for the production of aqueous pigment preparations and for coloring seeds.

## Revendications

1. C.I. Pigment Red 53:2 de formule (I) 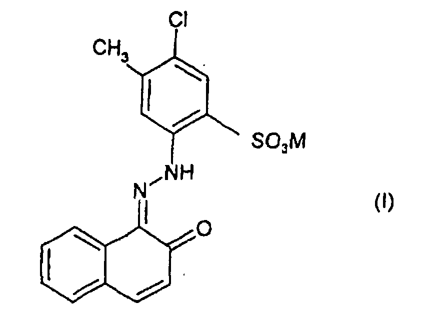 dans laquelle M est un cation, avec la condition qu'au moins 50 % des cations soient des ions calcium,
dans la modification γ, **caractérisée par** les réflexions caractéristiques suivantes dans le diffractogramme de poudre aux rayons X, mesuré avec la raie Cu-K_{α} :
| α: | 2Θ | d | Intensité relative en % |
|---|---|---|---|
| | 4,4 | 20,2 | 49 |
| | 5,8 | 15,4 | 100 |
| | 8,8 | 10,0 | 23 |
| | 10,3 | 8,6 | 25 |
| | 10,9 | 8,1 | 33 |
| | 12,2 | 7,3 | 15 |
| | 13,9 | 6,4 | 16 |
| | 15,4 | 5,8 | 15 |
| | 16,7 | 5,3 | 28 |
| | 17,6 | 5,0 | 16 |
| | 18,4 | 4,8 | 18 |
| | 18,6 | 4,8 | 18 |
| | 19,7 | 4,5 | 20 |
| | 20,8 | 4,3 | 18 |
| | 23,2 | 3,8 | 48 |
| | 24,0 | 3,7 | 21 |
| | 24,8 | 3,6 | 37 |
| | 25,2 | 3,5 | 34 |
| | 26,6 | 3,3 | 19 |
| | 27,3 | 3,3 | 19 |
| | 27,9 | 3,2 | 12 |
| | 29,3 | 3,0 | 14 |

2. C.I. Pigment Red 53:2 selon la revendication. 1, **caractérisé en ce que** M représente de 80 % jusqu'à pratiquement 100 % de calcium.

3. C.I. Pigment Red 53:2 selon la revendication 1 ou 2, **caractérisé en ce que** M représente, en plus du calcium, un ou plusieurs des cations Na⁺, H⁺, K⁺, NH₄⁺, Mg²⁺, Sr²⁺, Ba²⁺, Sn²⁺, Zn²⁺, Mn²⁺, Fe²⁺, Fe³⁺, Al³⁺, Si⁴⁺, Ti⁴⁺ ou TiO²⁺.

4. Procédé pour la préparation de C.I. Pigment Red 53:2 selon une ou plusieurs des revendications 1 à 3, **caractérisé en ce qu'**on met à réagir le β-naphtol avec le sel de diazonium de formule (2) 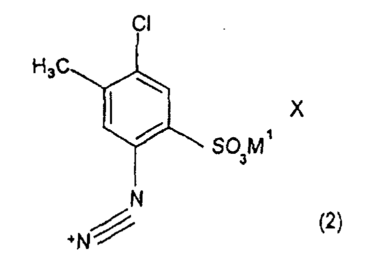 dans laquelle M¹ représente un atome d'hydrogène ou un équivalent cationique ; et
X représente un anion ;
et avec un sel de calcium, CaO ou Ca(OH)₂, en présence d'un ou plusieurs solvants choisis parmi la N-méthylpyrrolidone, l'isopropanol, l'isobutanol et l'alcool amylique ou d'un mélange des solvants mentionnés avec jusqu'à 99 % en poids d'eau.

5. Procédé selon la revendication 4, **caractérisé en ce que** la réaction est réalisée à une température comprise entre 0 et 200°C.

6. Procédé pour la préparation de C.I. Pigment Red 53:2 selon une ou plusieurs des revendications 1 à 3, **caractérisé en ce qu'**on chauffe C.I. Pigment Red 53:2, qui se présente complètement ou partiellement dans la modification α, en même temps avec un ou plusieurs solvants choisis parmi la N-méthylpyrrolidone, l'isopropanol, l'isobutanol et l'alcool amylique ou un mélange des solvants mentionnés avec jusqu'à 99 % en poids d'eau à une température comprise entre 40 et 200°C, on refroidit ensuite à une température comprise entre -20 et +90°C, on ajoute éventuellement de l'eau et/ou un deuxième solvant avec un pouvoir solvant plus faible et éventuellement un acide, une solution alcaline ou un sel.

7. Procédé selon la revendication 6, **caractérisé en ce qu'**on chauffe à entre 60°C et le point d'ébullition du solvant ou du mélange de solvants à pression normale.

8. Procédé selon la revendication 6 ou 7, **caractérisé en ce qu'**on met en oeuvre C.I. Pigment Red 53:2 , qui se présente complètement ou partiellement dans la modification α, sous la forme de gâteau de filtre presse humide ou de suspension aqueuse.

9. Procédé pour la préparation de C.I. Pigment Red 53:2 selon une ou plusieurs des revendications 1 à 3, **caractérisé en ce qu'**on malaxe ou on broie C.I. Pigment Red 53:2, qui se présente complètement ou partiellement dans la modification α, en présence d'un ou de plusieurs des solvants N-méthylpyrrolidone, isopropanol, isobutanol et alcool amylique ou dans un mélange des solvants mentionnés avec jusqu'à 99 % en poids d'eau à une température comprise entre 40 et 200°C.

10. Mélange de C.I. Pigment Red 53:2 contenant au moins 10 % de la modification γ selon une ou plusieurs des revendications 1 à 3.

11. Mélange de C.I. Pigment Red 53:2 selon la revendication 10, contenant au moins 25 % de la modification γ.

12. Mélange de C.I. Pigment Red 53:2 selon la revendication 10, contenant au moins 50 % de la modification γ.

13. Mélange de C.I. Pigment Red 53:2 selon la revendication 10, contenant au moins 75 % de la modification γ.

14. Utilisation de C.I. Pigment Red 53:2 selon une ou plusieurs des revendications 1 à 3 et 10 à 13 pour la pigmentation de peintures, de matières plastiques, de colorants d'impression, de toners et révélateurs électro-photographiques, de peintures en poudre, d'encre pour jet d'encre, pour la fabrication de préparations aqueuses de pigments, ainsi que pour la coloration par ensemencement.
